# EUROPEAN PATENT SPECIFICATION

(11) **EP 2 871 036 B1**
(45) Date of publication and mention of the grant of the patent: **18.01.2017**
(21) Application number: 13192241.1
(22) Date of filing: 08.11.2013
(51) Int. Cl.: B29C 49/20, B60K 15/03, B29L 31/00, B29K 23/00, B29C 49/04, B29C 51/12, B29C 51/26, B29C 49/42

(54) **Fuel tank**
Kraftstofftank
Réservoir de carburant

(43) Date of publication of application: 13.05.2015
(73) Proprietor: Inergy Automotive Systems Research (Société Anonyme), 1120 Bruxelles (BE)
(72) Inventor: Georis, Philippe, 60350 Chelles (FR)
(74) Representative: Potdevin, Emmanuel Eric

(56) References cited:
- DE-A1- 2 558 317
- DE-A1-102006 006 469
- US-A- 4 399 850
- US-A- 5 462 193

## Description

The invention relates to fuel tanks for motor vehicles.

A fuel tank may be subjected to high internal pressures, especially since legislation in some countries requires fuel tanks to be sealed. Consequently, the automobile manufacturers try to design cars that have no evaporative emission for their fuel systems. Such cars are for instance classified by the state of California as partial zero-emission vehicles (PZEV). Due to fuel vapors which are caused by temperatures while the engine is working, the internal pressure in a sealed tank may reach 40 000 Pa.

A metallic tank is able to bear usual overpressures within the tank, whereas a plastic tank generally is not. Nevertheless, plastic tanks are convenient since they are much lighter than metallic ones. Nowadays, fuel tanks are mostly made of high-density polyethylene which is particularly suitable because it is weight saving, safe and does not corrode contrary to many metals.

Application WO 2012/139962 discloses to reinforce a plastic tank with rigid internal pillars. This solution gives good results but requires to precisely size each pillar. It is also desired to reduce the total weight of the tank. Documents US-4 399 850, DE-25 58 317 disclose a tank comprising a rope to reinforce the tank. Documents DE-10 2006 006469 discloses a method to make a fuel tank. US-5 462 193 describes a tank reinforced by ropes.

An aim of the invention is to provide a fuel tank which is lighter and cheaper.

To this end, the invention provides a vehicle fuel tank, in accordance with claim 1, comprising at least one tensioned internal flexible link linked to at least two tank wall portions distant from each other, so as to prevent the wall portions from moving apart from each other.

Thus, the tank is protected against most common internal over-pressures. It is lighter than many tanks that have the same internal overpressure resistance. Moreover, since the flexible link occupies much less volume than a pillar, the tank can contain more fuel than one reinforced with pillars and having the same external surface. Since the link is flexible, the points of the surface of the tank linked by the link do not need to face each other and they may be located at many places, depending on other possible requirements. Moreover, attaching the flexible link to the tank is easier than attaching a pillar. Thus, the invention presents much more flexibility than the pillar solution. Furthermore, since the link is simpler to size and to make than a pillar, the making of the tank is easier and cheaper. Beside, although fuel tanks are mostly made of high-density polyethylene, some are made of metal and it is also possible to reinforce a metallic fuel tank against over-pressures with a flexible link according to the invention. The invention also makes it possible to reinforce with a link a part of the tank where the opposed wall portions are close to each other, which would be difficult to do with a pillar.

Preferably, the tensioning step is performed so that, once it is done, the wall portions are prevented from moving toward each other.

Thus, the tank is also protected against most common internal under-pressures.

Advantageously, the method comprises the step of linking the link to the wall portions so that each of at least two segments of the link links the wall portions independently of the other segment(s) and has at least one end distant from the ends of the other segment(s).

Thus, the number of links is reduced, which is cost-saving. In some cases, it is possible to form all the segments with only one link.

Preferably the method comprises the step of pulling on the link so that the link slides through at least one attachment means linking the link to at least one of the wall portions.

Thus, the making of the tank is easier.

In one embodiment, the method comprises the following steps, performed in this order:
- forming the wall portions into their final shape,
- fixing attachment means to the wall portions, and
- assembling the wall portions together.

Preferably, the method further comprises, after the assembling step, the step of linking the link(s) to the attachment means.

In another embodiment, the method comprises the following steps, performed in this order:
- fixing attachment means to a parison comprising the wall portions, and
- forming the parison to give the tank its final shape.

Preferably, the fixing step is performed with the link attached to the attachment means.

The invention also provides a fuel tank for a vehicle, the tank comprising at least one tensioned internal flexible link linked to at least two tank wall portions distant from each other, so as to prevent the wall portions from moving apart from each other.

Preferably, the link is tensioned so as to prevent the wall portions from moving toward each other.

Advantageously, the link or at least one of the links comprises at least two link segments each linking the two wall portions or two of the wall portions independently of the other segment(s) and having at least one end distant from the ends of the other segment(s).

Advantageously, the tank comprises at least two link segments, the two segments or at least two of the segments being linked to one of the wall portions independently of the other segment(s) and through common attachment means.

Thus, the number of attachment means is reduced.

Preferably, the link or at least one of the links is not extensible.

Advantageously, the tank comprises attachment means distinct from the link and the wall portions, and linking the link to the wall portions.

Thus, the attachment means is made independently of the links and may be fixed to the tank independently of them.

Preferably, the attachment means are arranged for enabling the link to slide through the attachment means, and for example comprise at least one collar through which the link is passed.

In one embodiment, the attachment means are welded to the wall.

The link may comprise a cable, a tape or a ribbon.

In one embodiment, the link or at least one of the links comprises a metal, such as steel.

In another embodiment, it comprises a polymer, such as poly-paraphenylene terephthalamide.

Such a polymer is light and is particularly advantageous to link two portions of the tank.

For example, the link or at least one of the links comprises fibbers, such as polyacrylonitrile fibbers.

Fibbers are easy to use, light and have good mechanical properties.

The link or at least one of the links may also comprise a composite material, for example including a metal and a polymer material.

In one embodiment, the attachment means comprises a metal.

In another embodiment, the attachment means comprises a plastic material, such as high-density polyethylene.

Such a plastic is light, safe and cost-saving.

In one embodiment, a wall of the tank comprises a metal.

In another embodiment, it comprises a plastic material, such as high-density polyethylene.

A plastic material is safe, light, easy to shape and cost-saving.

In one embodiment, the attachment means comprises fiber reinforced high-density polyethylene.

Such a material is light and strong.

The invention also provide a fuel tank for a vehicle, the tank having at least two internal attachment means fixed to at least two wall portions of the tank distant from each other, the attachment means being arranged to receive at least one flexible link for linking the wall portions.

Several embodiments of the invention will now be described as non-limiting examples and with reference to the accompanying drawings, in which:
- figure 1 is a cross sectional view of a tank according to an embodiment of the invention ;
- figure 2 is a view of a means to attach a flexible link to the wall portion of the tank of figure 1 ;
- figure 3 illustrates a step of making the tank of figure 1, and
- figures 4 and 5 are cross sectional views of tanks according to other embodiments of the invention.

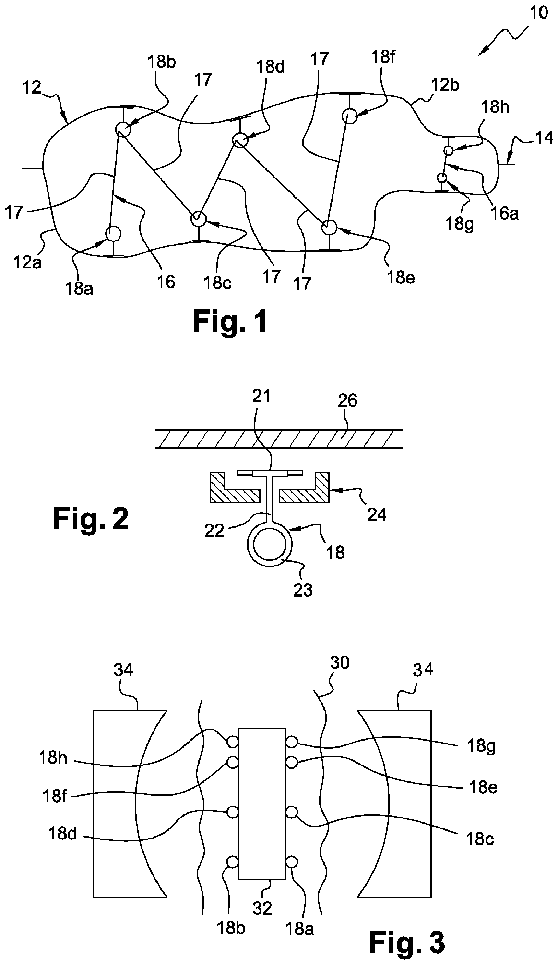

Figure 1 shows a fuel tank 10 for a thermal motor vehicle according to an embodiment of the invention. The tank 10 can contain any kind of fuel, such as diesel or petrol. Such a tank 10 has structural walls which define the shape of the tank 10. In this example, the tank has a lower wall 12a and an upper wall 12b. In this example, these walls 12a and 12b are made of high-density polyethylene (HPDE) and are shaped by blow molding. They are connected by means of a pinch 14.

The tank has means, not illustrated, for connexion to the motor and to a hose through which the tank can be filled with fuel.

The tank 10 comprises two links 16, 16a which are not extensible and in this embodiment comprise cables made of steel, a material that has suitable mechanical properties, especially regarding tensile stress. According to a variant of the embodiment, the links comprise a polymer, such as poly-paraphenylene terephtalamide, the so-called Kevlar®. According to another variant, they comprise polymer fibbers, such as polyacrylonitrile fibbers.

The tank 10 also comprises a plurality of means 18a-h to link or attach the links 16, 16a to internal wall portions of the tank 10. Each attachment means comprises, with reference to figure 2, a collar 18 and a pad 24. Figure 2 shows how the collar is fixed to an internal wall portion of the tank by means of the pad. The pad 24 has an annular shape with a circular aperture at the center and is welded to the internal wall portion. The collar 19 comprises a foot 21, a ring 23 and a stem 22 having two ends rigidly fixed to the foot and the ring respectively. The stem 22 extends through the circular aperture of the pad. The foot 21 is large enough to be retained by the pad against the internal wall portion. Here, the pad is made of high-density polyethylene and the collar 19 is made of steel. Nevertheless, the attachment means may be made of other materials which are suitable for the material of the wall portions of the tank. For instance, for a metallic tank, the pad is preferably made of steel.

The four attachment means 18a, 18c, 18e and 18g here are attached to the lower wall 12a and the four attachment means 18b, 18d, 18f and 18h are attached to the upper wall 12b. Nevertheless the number of attachment means could be varied and their arrangement as well.

The attachment means are located in the tank on wall portions distant from each other and facing each other. Each attachment means is positioned to be associated with at least another one attached to an opposite wall portion. In this embodiment, each attachment means of the lower wall 12a does not strictly face another attachment means on the upper wall 12b. Indeed, since the link is flexible, it is possible to locate the attachment means on the most appropriate wall portions. For example, one may choose locations for the attachment means which are easily accessible for fixing the attachment means to the wall or for fixing the link to the attachment means.

One cable 16 is passed through the collars of the six attachment means 18a to 18f, three on the lower wall 12a and three on the upper wall 12b. More precisely, cable 16 extends through attachment means 18a to 18f in this order. One end of the cable is firmly attached to means 18a and the other one to means 18f. These ends are fixed to these means so that they cannot move with respect to them. Cable 16 thus has five cable portions or segments 17 each extending from one attachment means to another one. More precisely, a first cable segment 17 extends from attachment means 18a to 18b, the following cable segment 17 extends from attachment means 18b to 18c and so on until the last segment extending from attachment means 18e to 18f. It is to be remarked that attachment means 18b to 18e each serve for two cable segments. Attachment means 18a to 18f are used for this cable only. No cable segment is attached to the same two attachment means than another cable segment. Each segments links two wall portions independently of the other segments and has at least one end distant from the ends of the other segments.

The other cable 16a, which is similar to cable 16, is passed through the two remaining attachment means 18g and 18h located on opposite walls 12a and 12b. This cable has a unique cable segment and each attachment means 18g and 18h is used for this cable only.

This arrangement of the cables forms a meshing in the tank.

Thus each of the cables 16 and 16a, and each of the segments 17, links the two opposite upper and lower walls.

Moreover, the cables 16 and 16a are tensioned. Tensioning is made in such a way in this example that it prevents the wall portions linked by the cables not only to move apart from each other but also from moving toward each other, that is to say it prevents them from getting closer than they are. This reinforces the global rigidity of the tank and its ability to resist over and under-pressures. The cables provide a structural reinforcement to the tank.

As shown, the cables 16 and 16a are independent from each other. Each cable can have its own length, tensioned force or material. Each cable can also link its own number of wall portions.

This tank may be made according to the following embodiment of the method of the invention.

In this embodiment, the method comprises a first step of independently forming the two walls 12a, 12b into their final shape, for example in a known way by blow-molding. The walls form two separate pieces.

Then it comprises the step of fixing the attachment means 18 to the wall portions. This step is especially easy as the tank is not formed and the interior face of the two walls is readily accessible. For example, the pads are welded to the wall portions.

Then it comprises the step of assembling the wall portions together to form the tank.

After this assembling step, it comprises the step of passing the cables 16, 16a through the attachment means 18. This may be done by introducing the cables through an opening made in the tank for receiving a pump module and manipulating the cables through this opening. As explained before, this is done so that each segment of the cables links the corresponding wall portions independently of the other segments and has at least one end distant from the ends of the other segments.

Beside, after one end of cable 16 has been firmly attached to means 16a and the cable has been passed through the means 18b-18e, the method comprises the step of pulling on the other end of the cable and thus on the segments 17 so that the cable slides through means 18b-18e and is tensioned. This is done so that, once it is done, the wall 12a, 12b are prevented from moving apart from each other and toward each other. Of course, during the pulling step, the walls of the tank may deform to permit tensioning of the cables. Moreover, since the cable 16 has several segments which pass through several collars, the segments can slide through the collars to adopt the most appropriate configuration during the tensioning step. Finally the free end of the cable is attached to means 18f. The other cable 16a is installed in a similar way.

According to another embodiment of the method, as illustrated on figure 3, a one-piece parison 30 is provided which comprises the walls 12a, 12b whereas these walls do not have their final shape.

The method comprises the step of fixing the attachment means 18a-h to a core 32 of a blow-molding mold also having two parts 34 having molding cavities. The cables may have been attached to the attachment means before that.

Then, the tank is formed into its final shape by blow-molding of the parison 30 with core 30 and parts 34. During this step, the attachment means 18a-h are rigidly fixed to the tank walls. Thus there is no need to access afterwards to the interior of the tank for fixing these means.

In an alternative embodiment, the attachment means 18a-h are fixed to the tank walls during a step of blow-molding serving mainly for this fixation but not giving its final shape to the tank. In a next step, the core 32 is withdrawn and then the mold is closed again and the parison is deformed by blow-molding on parts 34 to form the tank. This method may be performed in a similar way as the one disclosed in WO 2012/139961 in the name of the applicant, which teaches a method for fixing a three-part pillar into a tank. This document is herein incorporated by reference.

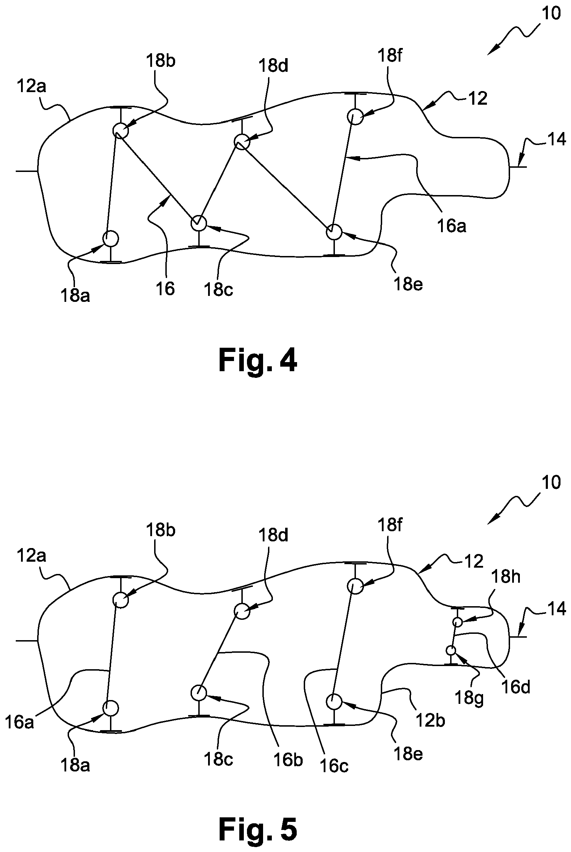

Figure 4 shows a second embodiment of the tank close to the first one. Thus, only the differences will be described hereinafter. A first cable 16 is passed through attachment means 18a to 18d. A second cable 16a is passed through attachment means 18d to 18f. Thus, attachment means 18d receives an end of each cable. The tank has two cables 16 and 16a only. The cables are tensioned as explained before.

Figure 5 shows a third embodiment. Only the differences with the first embodiment will be described. The tank has four cables 16a to 16d each forming a unique segment. Each cable has its own and exclusive pair of attachment means 18. More precisely, cable 16a has his ends attached to attachment means 18a and 18b. Cable 16b has his ends attached to attachment means 18c and 18d. Cable 16c has his ends attached to attachment means 18e and 18f. And cable 16d has his ends attached to attachment means 18g and 18h. Each collar serves for one cable only. This makes it possible to define for each cable the length, the tensioning force and the material independently from those of the other cables.

Of course other embodiments of the invention could be imagined without departing from its scope.

Although this is not preferred, it is possible to tension the link(s) so as not to prevent the walls from moving toward each other.

Generally, it is possible to use any kind of flexible link in combination with another kind of link without departing from the scope of the invention.

## Claims

1. A fuel tank (10) for a vehicle, the tank comprising at least one tensioned internal flexible link (16, 16a; 16; 16a-d) linked to at least two tank wall portions (12a, 12b) distant from each other, so as to prevent the wall portions from moving apart from each other, the tank (10) comprising a plurality of attachment means (18a-h) to attach the link (16, 16a; 16; 16a-d) to the wall portions (12a, 12b), **characterized in that** the attachment means (18a-h) comprises a collar (18) welded to an internal wall portion (12a, 12b) by means of a pad (24) having an annular shape with a circular aperture, the collar (18) having a foot (21), a ring (23) and a stem (22) having two ends rigidly fixed to the foot (21) and the ring (23) respectively and extending through the circular aperture of the pad (24), the foot (21) being large enough to be retained by the pad (24) against the internal wall portion (12a, 12b).

2. A tank according to the preceding claim wherein the link is tensioned so as to prevent the wall portions (16, 16a; 16; 16a-d) from moving toward each other.

3. A tank (10) according to at least one of the preceding claims, wherein the link or at least one of the links comprises at least two link segments (17) each linking the two wall portions or two of the wall portions independently of the other segment(s) and having at least one end distant from the ends of the other segment(s).

4. A tank (10) according to at least one of the preceding claims, comprising at least two link segments (17), the two segments or at least two of the segments being linked to one of the wall portions independently of the other segment(s) and through common attachment means (18d).

5. A tank (10) according to at least one of the preceding claims, wherein the link (16, 16a; 16; 16a-d) or at least one of the links is not extensible.

6. A tank (10) according to at least one of the preceding claims, comprising attachment means (18a-h) distinct from the link and the wall portions, and linking the link to the wall portions.

7. A tank (10) according to at least one of the preceding claims, wherein the attachment means are arranged for enabling the link to slide through the attachment means (18a-h).

## Patentansprüche

1. Kraftstofftank (10) für ein Fahrzeug, wobei der Tank mindestens eine gespannte interne flexible Verbindung (16, 16a; 16; 16a-d) aufweist, die mit mindestens zwei Tankwandabschnitten verbunden ist (12a, 12b), die voneinander entfernt sind, um zu verhindern, dass sich die Wandabschnitte von einander weg bewegen;
wobei der Tank (10) eine Vielzahl von Befestigungsmitteln aufweist (18a-h), um die Verbindung (16, 16a; 16; 16a-d) mit den Wandabschnitten (12a, 12b) zu koppeln; **dadurch gekennzeichnet, dass** die Befestigungsmittel (18a-h) einen angeschweißten Ringkragen (18) an einen internen Wandabschnitt (12a, 12b) aufweisen mittels einer Platte (24) mit einem ringförmigen Umriss und einer kreisförmigen Öffnung, wobei der Ringkragen (18) einen Fuß (21), einen Ring (23) und einen Stiel (22) mit zwei Enden aufweist, die starr an dem Fuß (21) bzw. an dem Ring (23) befestigt sind, und sich über die kreisförmige Öffnung der Platte (24) erstreckt, wobei der Fuß (21) groß genug ist, um von der Platte (24) gegen den inneren Wandabschnitt (12a, 12b) zurückgehalten zu werden.

2. Ein Tank nach dem vorhergehenden Anspruch, wobei die Verbindung vorgespannt ist, um zu verhindern, dass sich die Wandabschnitte (16, 16a; 16; 16a-d) aufeinander zu bewegen.

3. Ein Tank (10) nach mindestens einem der vorhergehenden Ansprüche, wobei die Verbindung oder mindestens eine der Verbindungen mindestens zwei Verbindungssegmente (17) aufweist, wobei jedes jeweils die zwei Wandabschnitte oder zumindestens zwei der Wandabschnitte unabhängig von den anderen Segment(en) verbindet und wobei jedes jeweils mindestens ein Ende entfernt von den Enden des anderen (der anderen) Segment(e) aufweist.

4. Ein Tank (10) nach mindestens einem der vorhergehenden Ansprüche, wobei der Tank mindestens zwei Verbindungssegmente (17) aufweist, wobei die beiden Segmente oder die mindestens zwei der Segmente mit einem der Wandabschnitte unabhängig von dem/den anderen Segment(en) verbunden ist durch gemeinsame Befestigungsmittel (18d).

5. Ein Tank (10) nach mindestens einem der vorhergehenden Ansprüche, wobei die Verbindung (16, 16a;16;16a-d) oder mindestens eine der Verbindungen nicht dehnbar ist.

6. Ein Tank (10) nach mindestens einem der vorhergehenden Ansprüche, wobei der Tank Befestigungsmittel (18a-h) aufweist, die sich von der Verbindung und den Wandabschnitten unterscheiden und welche die Verbindung mit den Wandabschnitten koppeln.

7. Ein Tank (10) nach mindestens einem der vorhergehenden Ansprüche, wobei die Befestigungsmittel derart angeordnet sind, um es zu ermöglichen, dass die Verbindung durch die Befestigungsmittel (18a-h) gleitet.

## Revendications

1. Réservoir de carburant (10) pour un véhicule, le réservoir comprenant au moins un lien souple intérieur (16, 16a ; 16 ; 16a à d) tendu relié à au moins deux parties de paroi (12a, 12b) du réservoir situées à distance l'une de l'autre, de façon à empêcher les parties de paroi de s'éloigner l'une de l'autre, le réservoir (10) comprenant une pluralité de moyens de fixation (18a à h) servant à fixer le lien (16, 16a ; 16 ; 16a à d) aux parties de paroi (12a, 12b), **caractérisé en ce que** les moyens de fixation (18a à h) comprennent une bague (18) soudée à une partie de paroi intérieure (12a, 12b) au moyen d'une pastille (24) présentant une forme annulaire avec une ouverture circulaire, la bague (18) comportant un pied (21), un anneau (23) et une tige (22) comportant deux extrémités respectivement fixées de manière rigide au pied (21) et à l'anneau (23) et s'étendant à travers l'ouverture circulaire de la pastille (24), le pied (21) étant suffisamment grand pour être retenu par la pastille (24) contre la partie de paroi intérieure (12a, 12b).

2. Réservoir selon la revendication précédente, dans lequel le lien est tendu de façon à empêcher les parties de paroi (16, 16a ; 16 ; 16a à d) de se déplacer l'une vers l'autre.

3. Réservoir (10) selon au moins une des revendications précédentes, dans lequel le lien ou au moins un des liens comprend au moins deux segments de lien (17), chacun reliant les deux parties de paroi ou deux des parties de paroi indépendamment de l'autre ou des autres segment(s) et comportant au moins une extrémité située à distance des extrémités de l'autre ou des autres segment(s).

4. Réservoir (10) selon au moins une des revendications précédentes, comprenant au moins deux segments de lien (17), les deux segments ou au moins deux des segments étant reliés à l'une des parties de paroi indépendamment de l'autre ou des autres segment (s) et par le biais d'un moyen de fixation (18d) commun.

5. Réservoir (10) selon au moins une des revendications précédentes, dans lequel le lien (16, 16a ; 16 ; 16a à d) ou au moins un des liens n'est pas extensible.

6. Réservoir (10) selon au moins une des revendications précédentes, comprenant des moyens de fixation (18a à h) distincts du lien et des parties de paroi, et reliant le lien aux parties de paroi.

7. Réservoir (10) selon au moins une des revendications précédentes, dans lequel les moyens de fixation sont conçus de façon à permettre au lien de glisser à travers les moyens de fixation (18a à h).
